Europäisches Patentamt

European Patent Office

Office européen des brevets

(11) Publication number: **0 124 635**
**B1**

# EUROPEAN PATENT SPECIFICATION

(45) Date of publication of patent specification: **06.09.89**

(21) Application number: **83104598.4**

(22) Date of filing: **10.05.83**

(51) Int. Cl.⁴: **C 22 B 5/16,** C 22 B 26/22, B 01 D 7/00

(54) **Method and apparatus for liquid metal collection from vapor using molten pool of collecting metal.**

(43) Date of publication of application:
**14.11.84 Bulletin 84/46**

(45) Publication of the grant of the patent:
**06.09.89 Bulletin 89/36**

(84) Designated Contracting States:
**DE FR**

(56) References cited:
FR-A-2 355 918
US-A-2 381 403
US-A-2 381 405
US-A-2 391 727
US-A-2 416 255
US-A-3 505 063
US-A-4 139 181

(73) Proprietor: **TOYOTA JIDOSHA KABUSHIKI KAISHA**
**1, Toyota-cho Toyota-shi**
**Aichi-ken 471 (JP)**

(72) Inventor: **Miura, Hirohisa**
**c/o Toyota Jidosha K. K. 1, Toyota-cho**
**Toyota-shi Aichi-ken (JP)**
Inventor: **Satou, Hiroshi**
**c/o Toyota Jidosha K. K. 1, Toyota-cho**
**Toyota-shi Aichi-ken (JP)**
Inventor: **Natsume, Toshio**
**c/o Toyota Jidosha K. K. 1, Toyota-cho**
**Toyota-shi Aichi-ken (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

## Description

### Background of the invention

The present invention relates to a method for collecting a metal from gases according to the precharacterizing portion of claim 1.

A known method of preparing a metal in the pure state is to smelt the metal (as for example from its oxide) in a rough manner, thus producing a rather impure form of the metal including for example impurities such as remaining oxide, and then to subject this raw material to a low pressure at a high temperature. At such a high temperature the metal is sublimated in the pure form in the state of metallic gas or vapor, and thus the question arises as to how the metal vapor can be quickly cooled down and reduced into the liquid phase, which is the most convenient for handling and post processing such as formation into ingots or the like.

In the case of metals such as for example lead and zinc, which have relatively low melting points, there has been practiced a prior art collectal method in which the high temperature metal vapor has been introduced into a condenser containing a mass of molten metal having a fairly low temperature which is lower than that of the metal vapor, and in which the metal vapor has been condensed into liquid by the molten metal being contacted intimately with the metal vapor by being splashed with a stirrer or paddle or impeller or the like. Thereby, the metal vapor is rapidly cooled and is picked up by the molten metal. As a variation of this prior art method, it has been known for the condenser to be shaped as a U-shaped tube, with the molten metal for collecting contained in the bend of the tube, and for the metal vapor to be blown around this U-shaped tube, being bubbled through the molten metal for collecting.

This prior art method is unfortunately not so suitable for collecting the vapors of metals such as magnesium and calcium (for example) which have high melting points; and further it has the disadvantage that in order well to promote the quick condensation of the metal vapor either the size of the condensation chamber has been required to be rather large, possibly including fins or the like for increasing the contact area between the collecting molten metal and the metal vapor, or alternatively as explained above a paddle or stirrer or an impeller such as a fan has been required, with an associated external power source, in order to physically stir up the molten collecting metal and the metal vapor, so as to provide appropriate cores or seeds for liquefaction of the metal vapor. This is troublesome and expensive to provide, since the apparatus is at quite high temperature, and accordingly various constructional difficulties arise, which can only be overcome at considerable expense.

US—A—2 391 727 discloses a method for collecting a metal from gases consisting essentially of a vapor of said metal, wherein the metal vapor, in admixture with carbon monoxide, is led at a temperature and a pressure at which it does not condense into the upstream end of a convergent-divergent nozzle, which generates a cone-shaped jet flow. The jet flow emitted from the nozzle impinges on successive streams or curtains of molten metal, whereby the metal vapor is quenched through contact with the liquid metal.

A rapid cooling and liquefaction of the metal vapor is achieved in case of the known method by impinging of the metal vapor jet against a downward moving curtain of liquid metal, which is generated by spraying charges of liquid metal into the collecting chamber.

It is an object of the present invention to provide a method for collecting a metal from gases, which can be realized without complicated circuits of and feeding parts for molten metal streams and which is nevertheless in a position to ensure rapid and continuous cooling and liquefaction of the metal vapor.

This object is achieved according to the invention by the features of the characterizing portion of claim 1. In the inventional method the metal vapor jet is cooled during the adiabatic expansion when passing the convergent-divergent or Laval nozzle to such an extent, that it condenses in the receiving vessel containing a pool of molten metal.

The basic idea of the present invention is to expand a metallic vapor through a convergent-divergent nozzle, i.e. a Laval nozzle, so far that the metallic vapor is cooled down to a temperature which is lower than the boiling point of the metal because of the loss of enthalpy, which has been converted into the kinetic energy of the jet flow generated by the expansion of the metallic vapor.

The metallic vapor is quenched by adiabatic expansion during passing the Laval nozzle down to a temperature at which the magnesium vapor is liquefied.

According to the inventional method, when the jet flow is led to the molten collecting metal, the metal in the jet, which has been condensed by the rapid adiabatic temperature drop in the convergent-divergent nozzle either to small liquid droplets or to fine powder particles, is entrained directly into the molten collecting metal pool and is accumulated therein, in the liquid phase. Accordingly, the collecting is effectively performed. This process is very suitable for being continuously practiced, and provides collected metal of high purity. Further, this method can collect a high proportion or ratio of the metal vapor, with little loss, and at acceptably low cost. The method outlined above is particularly suitable and useful for collecting vapor of a metal such as magnesium or calcium, which has a high melting point. Also, because the metal vapor is not collected as a solid mass on a collecting plate or the like, no risk is run that the jet from the convergent-divergent nozzle should blow away a part of the collected metal from said solid metallic mass, and the metal is collected in a suitable form for post processing such as for formation into ingots, i.e. the molten form, and does not require any remelting.

An advantageous modification of the invention derives from the subclaim.

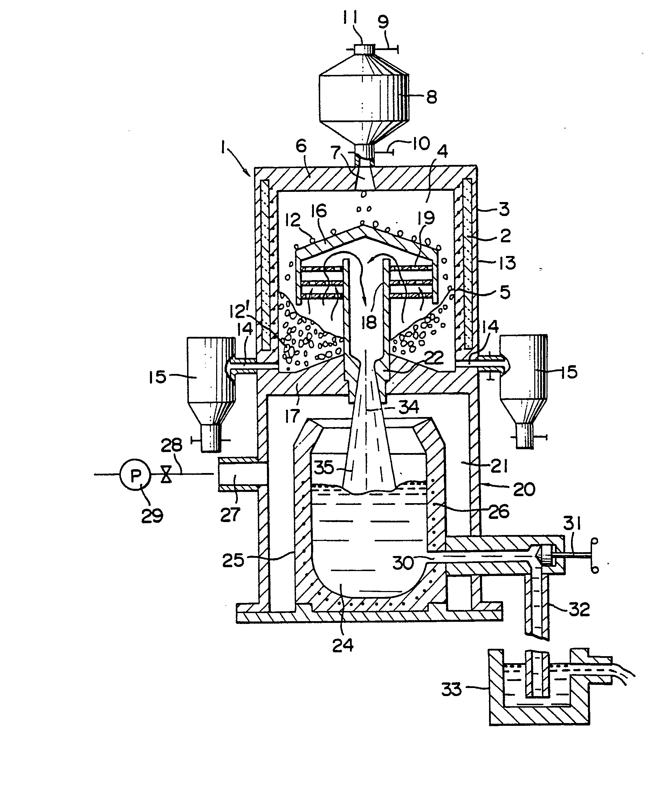

## Brief description of the drawing

The present invention will now be shown and described with reference to the preferred embodiment thereof, and with reference to the illustrative drawings. It should be clearly understood, however, that the description of the embodiment, and the drawing, are given purely for the purposes of explanation and exemplification only, and are not intended to be limitative of the scope of the present invention in any way, since the scope of the present invention is to be defined solely by the legitimate and proper scope of the appended claims. The sole figure of the drawing is a schematic structural diagram, showing the apparatus for practicing the preferred embodiment of the method for collecting metal vapor as a liquid using a collecting metal pool according to the present invention.

## The construction of the apparatus

In the drawing there is shown a schematic structural view of an apparatus for collecting metal in the liquid phase from vapor of the metal which has been sublimated, which apparatus is used for practicing the preferred embodiment of the method according to the present invention. In this figure, the reference numeral 1 generally denotes a sublimation furnace which is substantially formed as a closed container, which has a furnace body 3 provided with a layer 2 of insulating material; and a sublimation furnace chamber 4 is defined as a cavity within this sublimation furnace 1. A heater 5 is embedded in the wall of the furnace chamber 4, generally around said furnace chamber 4 and within the layer 2 of insulating material, so as to heat up the furnace body 3 and said furnace chamber 4 defined therein with said layer 2 of insulating material providing an insulation function.

In an upper end wall 6 of the furnace chamber 4 there is provided a sublimation material charging port 7, to which is connected the lower end of a sublimation material charging hopper 8, the upper end of which is connected to a charging intake 11. Two control valves 9 and 10 are provided, respectively between the upper end of the charging hopper 8 and the charging intake 11 and between the lower end of the charging hopper 8 and the charging port 7, so that by opening and closing these control valves 9 and 10 in an alternating fashion as will be easily understood by one of ordinary skill in the art material for sublimation may be charged into the sublimation furnace chamber 4 through the charging port 7 without substantially deteriorating the gas tight condition of the sublimation furnace chamber 4. A charged mass of such sublimation material is shown in the sublimation furnace chamber 4 and is denoted by the reference numeral 12. In a side wall 13 of the furnace chamber 4 there are provided two sublimation residue discharge ports 14 which lead to residue accumulation hoppers 15 the outlets of which are controlled by valves; in fact, again, a similar double valve arrangement is provided for discharging from time to time sublimation residues such as schematically indicated in the figure as 12' which are produced in the chamber 4 of the furnace 1 by sublimation (as will be explained later) through these sublimation residue discharge ports 14 without deteriorating the gas tight condition of the sublimation furnace chamber 4, although this is not shown in the figure.

A bottom 17 of the sublimation furnace chamber 4 has a metal vapor conduit 18 set therein, the upper end of which opens to the interior of the sublimation furnace 4 with the interposition of a particle trap construction 16, so as to communicate the furnace chamber 4 with a metal vapor collecting chamber 21 provided below the furnace chamber 4 within the body of a metal vapor collecting furnace 20. The downstream end of this metal vapor conduit 18 is formed as a convergent-divergent nozzle or Laval nozzle 22, which opens substantially vertically downwards into said metal vapor collecting chamber 21. The particle trap construction 16 is shaped as a cap or hood, and includes a plurality of filters 19 for intercepting and capturing fine powder impurities in the metal vapor which is passing through them.

Within the lower part of the metal vapor collecting chamber 21, below and opposed to the lower end of the convergent-divergent nozzle 22, there is provided a receiving vessel or a collecting metal pot 25, within which there is present during operation of the apparatus a pool 24 of molten collecting metal. This collecting metal pot 25 is provided with a heater 26. The lower part of the metal vapor collecting chamber 21 is communicated, via a molten metal take out port 30 and via a molten metal take out conduit 32 which is controlled by a control valve 31, to a ladle 33 for removing molten metal. A swag take out port not shown in the figure is also provided for removing slag from the surface of the pool 24 of molten collecting metal in the collecting metal pot 25 in the collecting chamber 21. A vacuum port 27 is communicated, via a conduit 28 and a control valve, to a vacuum pump 29, for evacuating the interior parts of the apparatus as a whole to appropriate vacuum levels, as will be more particularly described later.

The central axial line 34 of the convergent-divergent nozzle 22 extends in the metal vapor collecting chamber 21 substantially vertically, so that as explained later during operation of the convergent-divergent nozzle 22 the spray or jet flow 35 of metal vapor from said convergent-divergent nozzle 22 should impact substantially at right angles onto the surface of the pool 24 of molten collecting metal in the collecting metal pot 25.

## The general operaton of the apparatus

The shown apparatus is generally used as follows. First, raw material for sublimation of an appropriate sort for producing vapor of a metal which is required to be refined as will be understood in detail later is charged into the furnace chamber 4 of the sublimation furnace 1, by charging this raw material into the charging hopper 8 through the charging intake 11, and by then opening and closing the control valves 9 and 10 in an alternating fashion as outlined above so as to transfer this raw sublimation material through the charging hopper 8 into the furnace chamber 4 without allowing gas from the outside to enter the furnace chamber 4 in substantial amount. Then the vacuum pump 29 is operated so as to depress the pressure within the apparatus, and the heater 5 is operated so as to heat up the furnace chamber 4 and the raw sublimation material charged therein to a predetermined temperature $T_1$, so as to cause the charged sublimation raw material to emit metal vapor of the metal which is to be refined, said metal vapor being at a pressure $P_1$ and possibly including dust or other powder type impurities blown up from said sublimation raw material. This metal vapor then passes in the heated state as shown by the arrows in the figure through the particle trap construction 16 of the sublimation furnace 1, which appropriately intercepts said dust or other solid impurities if any are present, and is then ejected from the furnace chamber 4, according to the difference of pressures between the interior of the furnace chamber 4 which is at said pressure $P_1$ and the interior of the metal vapor collecting chamber 21 which is kept at a pressure $P_2$ substantially lower than the pressure $P_1$, through the metal vapor conduit 18 and through the convergent-divergent nozzle 22 at the downstream end of said metal vapor conduit 18, into the metal vapor collecting chamber 21, and sprays out of the convergent-divergent nozzle 22 as the jet flow 35 which impinges against the surface of the pool 24 of molten collecting metal, which is the same metal as the metal of the metal vapor which is to be collected, in the collecting metal pot 25 placed at the bottom of said collecting chamber 21. As this metal vapor passes through the convergent-divergent nozzle 22, it reaches a supersonic speed and expands adiabatically very quickly, and thus the metal vapor is very quickly cooled down by this adiabatic expansion to a second temperature $T_2$, which is envisaged to be well below the condensation temperature of said metal vapor, and thus may be at least partly condensed into fine metal droplets or particles.

The jet flow 35 including cooled metal vapor (in fact supercooled vapor and/or possibly fine particles of liquid or solid metal thus produced impinges on the surface of the pool 24 of molten collecting metal in the collecting metal pot 25 at the bottom of the collecting chamber 21 substantially perpendicularly, and the metal in said jet flow 35 becomes mixed with and entrained into the molten collecting metal. The collecting chamber 21 and the sublimation furnace chamber 4 are maintained at their pressures $P_1$ and $P_2$ by the vacuum pump 29 being operated as and when necessary, so that metal vapor is sucked out of said collecting chamber 21, via the vacuum port 27 and the conduit 28. The sucking rate of the vacuum pump 29 thus is controlled so as to maintain the pressures in the sublimation furnace chamber 4 and in the metal vapor collecting chamber 21 at substantially their respective desired values $P_1$ and $P_2$, according of course also to various other parameters of the apparatus and its operation; but in fact this operation of the vacuum pump 29 may only be required when starting up the apparatus, and not during its steady operation. However, inevitably it may be the case that a small amount of gas is evolved from the charged mass 12 of the heated raw sublimation material which is being refined in the sublimation furnace chamber 4, and this gas will pass through the convergent-divergent nozzle 22 and thus will be required to be evacuated from the metal vapor collecting chamber 21 by the vacuum pump 29, either continuously or intermittently. Further, as a practical matter during the steady operation of the apparatus it may not be necessary to continually operate the heater 26 for keeping the pool 24 of molten collecting metal in the collecting metal pot 25 in the molten state, since the release of the latent heat of the metallic vapor from the jet flow 35 from the convergent-divergent nozzle 22 may provide sufficient heat for that purpose.

From time to time, some of the collecting molten metal pool 24 in the collecting metal pot 25 at the bottom of the metal vapor collecting chamber 21 with an amount of the sublimed and collected metal from the jet flow 35 entrained therein, is removed via the molten metal take out port 30 and the molten metal take out conduit 32 by operation of the control valve 31 into the ladle 33, without disturbing the depressurized state of the apparatus. Further, from time to time, some of the slag in the bottom portion of the furnace chamber 4 is removed by operation of the above described (but not shown) means, again without disturbing the depressurized state of the apparatus; and also slag on the surface of the molten metal pool 24 may be removed.

Description of the preferred method embodiment

The apparatus described above was operated by charging a mass of lumps of raw refined magnesium with a small amount of impurities therein (which in fact was made by roughly smelting magnesium oxide) as a raw material for sublimation into the furnace chamber 4 of the sublimation furnace 1, by operating the vacuum pump 29, by operating the heater 5, by charging magnesium metal into the collecting metal pot 25 of the metal vapor collecting chamber 21 and by melting this collecting magnesium metal into a pool 24 of collecting metal by operating the heater 26, for collecting the magnesium produced by sublimation in the sublimation furnace 1. Thus, the collecting metal (magnesium) used for the collecting metal pool 24 was the same metal as the metal (magnesium) which was to be collected. The temperature $T_1$ to which the furnace chamber 4 and the raw sublimation material charged thereinto were heated was 900°C, and the rate of suction of the vacuum pump 29 was controlled so as to keep the pressure $P_1$ within the sublimation furnace chamber 4 at approximately 80 to 100 torr (1 torr≑1.33 mbar), and so as to keep the pressure $P_2$ within the metal vapor collecting chamber 21 at approximately 15 to 20 torr (1 torr≑1.33 mbar). The second heater 26 was so operated as to maintain the temperature within the molten collecting magnesium metal pool at about 680 to 700°C, and thus so as to keep said collecting metal pool 24 of magnesium metal therein in the molten state.

As explained above, the raw refined magnesium in lump form in the sublimation furnace chamber 4 of the sublimation furnace 1 was sublimated, so as to produce metallic magnesium in vapor form, and this magnesium vapor then flowed out through the metal vapor conduit 18 and through the convergent-divergent nozzle 22 into the metal vapor collecting chamber 21, attaining a supersonic speed as it passed through the convergent-divergent nozzle 22. The jet flow 35 thus produced was quickly cooled down by adiabatic expansion in the convergent-divergent nozzle 22 to below the temperature of condensation of the magnesium vapor, and impinged against the surface of the molten collecting magnesium metal pool 24 within the collecting metal pot 25 in the metal vapor collecting chamber 21, and the magnesium vapor (which in fact was at this time either supercooled or partially liquefied and/or solidified) in said jet flow 35 was entrained into and mixed with the molten magnesium metal pool 24.

The entrained magnesium was then of course brought the liquefied state by this entrainment into the collecting metal pool 24, and remained therein. The magnesium in the pool 24 was removed from the apparatus from time to time as explained above. The depression of the liquid surface of the pool 24 of molten collecting magnesium metal was about 50 mm. The physical condition of the raw material charged into the sublimation furnace chamber 4 was lump briquette. The nature of this raw sublimation material was 92% Mg metal (the product of raw smelting as explained above). The throat diameter of the convergent-divergent nozzle 22 was 25 mm. The average pressure in the sublimation furnace 4 was 92 torr (1 torr≑1.33 mbar). The average pressure in the condensation furnace chamber 21 was 18.2 torr (1 torr≑1.33 mbar). The collecting ratio was 99.6%. The average purity of the collected magnesium was 99.93%.

The results described above of operating the apparatus according to the preferred embodiment of the method of the present invention show that, even in the case of a metal such as magnesium, which has a relatively high melting point, a good result of collecting metal vapor which has been sublimated can be obtained, with a purity and a collecting ratio both close to 100%.

The pool 24 of molten collecting metal in the collecting metal pot 25 may be initially provided by either (a) placing an initial supply of metal (which as stated above is to be the same as the metal the vapor of which is being sublimated for collection) in said collecting metal pot 25 before sealing the apparatus: or (b) by directly collecting in the bottom of the collecting metal port 25 some metallic vapor from the jet flow 35 from the convergent-divergent nozzle 22 in the initial phase of operation of the apparatus; or (c) by melting some metal which is collected from the metallic vapor from the jet flow 35 from the convergent-divergent nozzle 22 by a capturing plate or the like as a solid metal mass, by the use of the heater 26.

**Claims**

1. A method for collecting a metal from gases consisting essentially of a vapor of said metal, characterized by adiabatically expanding said gases through a Laval nozzle so as to form a jet whose kinetic energy is so much that said vapor of said metal is expanded to a pressure and is cooled down to a temperature which is lower than the boiling point of said metal at said pressure due to loss of part of enthalpy thereof by conversion thereof into said kinetic energy, said jet being blown into a pool of molten metal of the same kind as the metal vapor contained in the receiving vessel.

2. A method according to claim 1, wherein said jet is blown substantially vertically downwardly into said receiving vessel.

**Patentansprüche**

1. Verfahren zum Sammeln eines Metalls aus Gasen, die im wesentlichen aus einem Dampf dieses Metalls bestehen, gekennzeichnet, durch eine adiabatische Expansion der Gase in eine Laval-Düse, um eine Strömung auszubilden, deren kinetische Energie aufgrund des Verlusts an Enthalpie der Strömung und deren Umwandlung in die kinetische Energie so groß ist, daß der Dampf des Metalls auf einen Druck expandiert und auf eine Temperatur herabgekühlt wird, die niedriger als der Siedepunkt des Metalls bei dem Druck ist, wobei die Strömung in ein in einem Aufnahmebehälter enthaltenes Bad geschmolzenen Metalls derselben Art wie der Metalldampf geblasen wird.

2. Verfahren nach Anspruch 1, bei dem die Strömung etwa in Vertikalrichtung nach unten in den Aufnahmebehälter geblasen wird.

**Revendications**

1. Un procédé de récupértion d'un métal à partir de gaz consistant essentiellement en une vapeur dudit métal, caractérisé par une détente adiabatique desdits gaz à travers une tuyère de Laval, de façon à former un jet dont l'énergie cinétique est telle que ladite vapeur dudit métal est détendue à une pression et est refroidie à une température qui est inférieure au point d'ébullition dudit métal à ladite pression, du fait de la perte d'une partie de l'enthalpie de celui-ci par conversion de celle-ci en ladite énergie cinétique, ledit jet étant insufflé dans une bain de métal fondu de même genre que la vapeur de métal contenue dans le récipient récepteur.

2. Un procédé selon la revendication 1, dans lequel ledit jet est insufflé de façon sensiblement verticale vers le bas dans ledit récipient récepteur.

EP 0 124 635 B1

1